# EUROPÄISCHE PATENTANMELDUNG

(11) **EP 3 381 669 A1**
(43) Veröffentlichungstag der Anmeldung: **03.10.2018**
(21) Anmeldenummer: 18152204.6
(22) Anmeldetag: 18.01.2018
(51) Int. Cl.: B29D 30/72

(54) **VERFAHREN ZUR TYPISIERUNG EINES FAHRZEUGREIFENS UND FERTIGUNGSANLAGE ZUR DURCHFÜHRUNG DES VERFAHRENS**

(30) Priorität: 30.03.2017 DE 102017205413
(71) Anmelder: Continental Reifen Deutschland GmbH, 30165 Hannover (DE)
(72) Erfinder: Liu, Fei, 30159 Hannover (DE); Schramm, Oliver, 31177 Harsum (DE); Weber, Johanna, 30989 Gehrden (DE); Amir-Hisham, Muhammad-Fikri, 40100 Shah Alam (MY)
(74) Vertreter: Finger, Karsten

(57) **Zusammenfassung**

Es wird ein Verfahren zur Typisierung eines Fahrzeugreifens (1) mit mindestens einer Farbmarkierung vorgestellt, die mittels eines Farbdruckverfahrens auf den Fahrzeugreifen (1) aufgebracht wird. Das Verfahren ist erfindungsgemäß dadurch gekennzeichnet, dass:
-zunächst der Fahrzeugreifen (1) vulkanisiert wird,
-anschließend eine Sensoreinrichtung den Fahrzeugreifen (1) anhand einer an dem Fahrzeugreifen (1) vorhandenen Markierung identifiziert,
-der Fahrzeugreifen (1) dann in einer Fertigungsanlage (2) auf ein erstes Felgenteil (3) und anschließend auf ein zweites Felgenteil (4) aufgezogen und mit Druckluft gefüllt wird
-die diesen Fahrzeugreifen (1) typisierende Farbcodierung mittels einer Tintenstrahltechnik auf die profilierte Lauffläche des Fahrzeugreifens (1) aufgebracht wird
und
-die Felgenteile (3, 4) nach der Farbaufbringung wieder vom Fahrzeugreifen (1) entfernt werden.

Darüber hinaus wird eine Fertigungsanlage zur Durchführung des Verfahrens beschrieben.

## Beschreibung

Die Erfindung betrifft ein Verfahren zur Typisierung eines Fahrzeugreifens und eine Fertigungsanlage zur Durchführung des Verfahrens.

Bei der Fahrzeugreifenherstellung wird aus Naturkautschuk und verschiedenen Beimischungen eine Gummimischung hergestellt. Anschließend wird diese Gummimischung in einem Extruder durch formgebende Düsen gespritzt. Auf diese Weise werden beispielsweise der Laufstreifen, die Seitenwände und andere Konstruktionselemente hergestellt. Die einzelnen Bestandteile des Fahrzeugreifens werden nach dem Extrudieren zugeschnitten. Unabhängig vom Extrusionsverfahren erfolgt auch die Erzeugung des textilen Reifenunterbaus, also der Karkasse, der Wulstkerne und der Stahlgürtellagen. Eine weitere Fertigungsstufe bildet schließlich der Reifenaufbau. Hier werden die einzelnen Komponenten zu einem Reifenrohling zusammengefügt. Auf einer Aufbautrommel, also einfacher gesagt, einem Stahlkörper mit aufblasbarem Gummibalg, wird das hergestellte Material manuell oder automatisch aufgelegt und zusammengefügt. Danach ist der Rohling, der auch als "grüner Reifen" bezeichnet wird, fertig. Dieser grüne Reifen hat noch kein Profil und ist weder elastisch, noch besonders haltbar. Um den grünen Reifen mit einem Profil auszustatten, schließt sich nunmehr der Vulkanisationsvorgang an, der in einem Vulkanisationswerkzeug erfolgt. Hier erhält der Fahrzeugreifen nicht nur sein Profil, sondern unter Druck und bei Temperaturen von etwa 160 bis 200° C wird aus der bis dahin plastischen Kautschukmischung ein elastischer Gummi. Die einzelnen Bestandteile des Fahrzeugreifens werden während der Vulkanisation unlösbar miteinander verbunden und das Profil wird auf den Laufstreifen geprägt. Hierzu ist im Inneren des Vulkanisationswerkzeuges das Reifenprofil als Negativmuster eingraviert. Nach der Vulkanisation wird der fertiggestellte Fahrzeugreifen aus dem Vulkanisationswerkzeug entnommen.

Zur Unterscheidung unterschiedlicher Fahrzeugreifen ist es bereits bekannt, die Fahrzeugreifen mit Farbmarkierungen zu versehen und sie damit zu typisieren. Bislang werden die Farben als Referenzlinien während der Extrusion aufgebracht. Diese Farbmarkierung wird allerdings aufgrund des Materialflusses während der Vulkanisation stark beeinflusst, so dass das Erscheinungsbild der Farbmarkierungen teilweise unbefriedigend ist. Zudem ergibt sich hieraus eine potentielle Fehlerquelle, da eine fehlerhafte oder nicht erkennbare Farbmarkierung zu Ausschuss führt.

In der EP 2 792 474 A1 wird allgemein ein Farbauftragsverfahren beschrieben, bei dem eine farbige Beschriftung auf der Seitenwand des Fahrzeugreifens vorgesehen wird. Da die Seitenwand des Fahrzeugreifens jedoch eine gewölbte Struktur aufweist, ist es schwierig, die Farbe mit stets gleich bleibender Qualität aufzubringen. Aus diesem Grund schlägt die Druckschrift eine Lösung vor, nach der eine Sensoreinrichtung permanent den Abstand zwischen dem Druckkopf und der Oberfläche der Seitenwand des Fahrzeugreifens erfasst. Die auf diese Weise ermittelten Abstandswerte werden verwendet, um gegebenenfalls sich einstellende Abweichungen zu korrigieren und der zuvor erwähnten Wölbung optimal zu folgen. Dadurch kann erreicht werden, dass während des Farbauftrags stets ein gleich bleibender Abstand zwischen dem Druckkopf und der Oberfläche der Seitenwand gegeben ist. Das Ergebnis des Farbauftrags kann damit wesentlich verbessert werden. Jedoch ist der Aufwand hierfür relativ hoch.
Ein nachteiliger Aspekt dieser Lösung ist auch darin zu sehen, dass Fahrzeugreifen häufig auf der Seitenwand, also liegend aufbewahrt werden, so dass es zu Verunreinigungen der Farbmarkierung und einem wechselseitigen Abrieb kommen kann, der die Erkennbarkeit dieser Farbcodierung nachteilig beeinflusst.
Eine ähnliche Lösung, wie sie in der EP 2 792 474 A1 offenbart wurde, geht auch aus der WO 2015/159967 A1 hervor.
Die EP 1 093 074 A2 betrifft ferner ein Verfahren zur Aufbringung eines Barcodes auf die Seitenwand eines Fahrzeugreifens, um diesen identifizieren zu können.

Der Erfindung liegt die Aufgabe zugrunde, eine Kennzeichnung eines Fahrzeugreifens mit farbigen Referenzlinien zu ermöglichen, deren Erscheinungsbild optimiert ist und bei der kein Einfluss auf den Vulkanisationsvorgang stattfindet. Hierfür ist ein Verfahren anzugeben, das geeignet ist, eine farbige Typisierung der Fahrzeugreifen zu ermöglichen. Darüber hinaus soll eine hierfür einsetzbare Fertigungsanlage beschrieben werden.

Die Erfindung löst diese Aufgabenstellung mit den Merkmalen der unabhängigen Patentansprüche 1 und 13.
Weitere Ausgestaltungen der Erfindung sind Gegenstand der sich jeweils anschließenden Unteransprüche.

Ein Verfahren zur Typisierung eines Fahrzeugreifens mit mindestens einer Farbmarkierung, die mittels eines Farbdruckverfahrens auf den Fahrzeugreifen aufgebracht wird, ist erfindungsgemäß dadurch gekennzeichnet, dass:
- zunächst der Fahrzeugreifen vulkanisiert wird,
- anschließend eine Sensoreinrichtung den Fahrzeugreifen anhand einer an dem Fahrzeugreifen vorhandenen Markierung identifiziert,
- der Fahrzeugreifen dann in einer Fertigungsanlage auf ein erstes Felgenteil und anschließend auf ein zweites Felgenteil aufgedrückt und mit Druckluft gefüllt wird,
- die diesen Fahrzeugreifen typisierende Farbcodierung mittels einer Tintenstrahltechnik auf die profilierte Lauffläche des Fahrzeugreifens aufgebracht wird
   und
- die Felgenteile nach der Farbaufbringung wieder vom Fahrzeugreifen entfernt werden.

Mit dem erfindungsgemäßen Verfahren wird insbesondere durch die Anbringung der Farbkodierung nach dem Vulkanisationsvorgang eine wesentlich bessere Qualität der Farbkodierung eines Fahrzeugreifens erreicht. Die zum Einsatz kommende Tintenstrahltechnik gestattet darüber hinaus, beliebige Geometrien, Farben oder Formen auf dem Fahrzeugreifen abzubilden, so dass beispielsweise auch Marken oder Ähnliches dargestellt werden können. Die Herstellung der Fahrzeugreifen wird insgesamt flexibler und der Automatisierungsgrad ist gegenüber bekannten Verfahren erhöht. Durch die Entkopplung vom Extrusionsprozess und die Verlagerung der Farbcodierung auf einen Zeitpunkt nach der Vulkanisation hat der Vulkanisationsvorgang keinen Einfluss auf die Qualität der Farbcodierung.

Eine erste Ausgestaltung des Verfahrens ist darin zu sehen, dass die Aufbringung der den Fahrzeugreifen typisierenden Farbcodierung mittels einer kontinuierlichen, das heißt, mittels einer von Unterbrechungen freien Tintenstrahltechnik erfolgt, wobei zur Aufbringung der Farbmarkierung auf die profilierte Lauffläche des Fahrzeugreifens in bevorzugter Weise ein Tintenstrahldrucker verwendet wird. Mit der Tintenstrahltechnik lassen sich sehr genaue Darstellungen abbilden, was sich vorteilhaft auf die Qualität der Farbcodierung des Fahrzeugreifens auswirkt.

Gemäß einer Weiterbildung der Erfindung ist ferner vorgesehen, dass während der Aufbringung der Farbcodierung der Fahrzeugreifen in eine Rotationsbewegung versetzt wird. Diese Rotationsbewegung kann durch einen Roboterarm erzeugt werden oder durch einen geeigneten Antrieb der Lagerung des Fahrzeugreifens. Durch die Rotation kann die Farbcodierung gleichmäßig auf die profilierte Lauffläche des Fahrzeugreifens aufgebracht werden, ohne dass eine aufwändige Mechanik zur Bewegung der Tintenstrahltechnik, insbesondere des Druckkopfes des Tintenstrahldruckers, erforderlich wird. Der Tintenstrahldrucker kann damit insgesamt einfacher ausgeführt werden, so dass es in vorteilhafter Weise ausreichend ist, diesen horizontal, also auf den Fahrzeugreifen zu, oder im rechten Winkel zur Fertigungsanlage, also, vertikal, zu bewegen. Da die Fahrzeugreifen mittels der Fördereinrichtung der Fertigungsanlage liegend transportiert werden, entspricht die zuletzt genannte Richtung folglich einer Richtung quer zur Umfangsrichtung der Lauffläche des Fahrzeugreifens.

In der Fahrzeugreifenherstellung werden zur Dokumentierung und Datenerfassung häufig Barcodes oder QR-Codes eingesetzt. Diese Codes können beispielsweise Bestandteil eines Aufklebers sein oder unmittelbar am Fahrzeugreifen vorgesehen werden und sind durch einfache optische Lesegeräte auslesbar. Daher haben sich Barcodes oder QR-Codes bereits etabliert und vielfach bewährt. Dementsprechend wird erfindungsgemäß dieses vorteilhafte Verfahren ebenfalls eingesetzt und zur Identifizierung und Nachverfolgung eines jeden Fahrzeugreifens verwendet. Folglich handelt es sich bei der eingangs genannten Markierung zur Identifizierung des Fahrzeugreifens bevorzugt um einen Barcode oder einen QR-Code.

Da das erfindungsgemäße Verfahren für die unterschiedlichsten Arten und Größen von Fahrzeugreifen einsetzbar ist, wird zur Vereinfachung der zum Einsatz kommenden Fertigungsanlage mindestens eines der Felgenteile als eine Multi-Zoll-Felge ausgeführt, wobei bevorzugt beide Felgenteile Multi-Zoll-Felgen sind. Die Multi-Zoll-Felgen werden an dem Fahrzeugreifen montiert. Wie eingangs bereits beschrieben wurde, wird dabei zunächst eine erste, untere Felge an den Fahrzeugreifen herangeführt, um anschließend eine zweite, obere Felge zuzuführen, die mit dem Fahrzeugreifen verbunden wird. Auf diese Weise wird ein Fahrzeugrad simuliert, das auch luftdicht ist. Die Multi-Zoll-Felge passt sich dabei automatisch der vorliegenden Fahrzeugreifengröße an.

Im Anschluss an die Montage der beiden Felgenteile wird der Fahrzeugreifen in der Fertigungsanlage mit einem Druck zwischen 0,1 bis 4 bar aufgepumpt, um stets gleich bleibende Bedingungen für die Aufbringung der Farbkodierung zu schaffen. Besonders bevorzugt wird ein Druck zwischen 0,5 bis 1 bar. Insgesamt ist dabei festzustellen, dass ein geringer Reifeninnendruck ausreichend ist, um die Farbkodierung auf den Fahrzeugreifen aufzubringen. Im Unterschied zu einem vollständig, also mit dem normalen Reifeninnendruck aufgepumpten Fahrzeugreifen wird dadurch Fertigungszeit und Energie eingespart.

Trotz der maßgeblichen, qualitativen Verbesserung der Farbkodierung eines Fahrzeugreifens mit dem erfindungsgemäßen Verfahren ist es zur Qualitätssicherung sinnvoll, den Farbauftrag auf dem Fahrzeugreifen mittels einer optischen Sensoreinheit oder eines Kameraprüfsystems zu prüfen, das damit bevorzugter Weise Bestandteil der Fertigungsanlage sein kann oder eine separate Prüfeinheit bildet.

Die Montage der Felgenteile am Fahrzeugreifen erfolgt innerhalb der Fertigungsanlage, bevor der Fahrzeugreifen mit seiner ihn kennzeichnenden Farbkodierung versehen wird. Dabei geht eine Ausgestaltung der Erfindung dahin, dass die erste, untere Felge als Bestandteil einer "Station" in der Fertigungsanlage aufgenommen ist. Der zugehörige Fahrzeugreifen definierter Größe und/oder Art wird zur Verbindung mit der ersten Felge mittels einer Fördereinrichtung zugeführt, wobei anschließend die zweite, obere Felge mittels eines Roboters aus einem Magazin ausgewählt, zugeführt und montiert wird. Der Einsatz eines Roboters macht die gesamte Fertigungsanlage sehr flexibel, weil dieser beispielsweise auch weitere Montageschritte übernehmen kann.

Eine Alternative zu dem zuvor genannten Vorgehen besteht darin, dass die erste, untere Felge zur Verbindung mit dem Fahrzeugreifen als Bestandteil einer "Station" in der Fertigungsanlage aufgenommen ist und der Fahrzeugreifen mittels einer Fördereinrichtung, computergesteuert, einer Station der Fertigungsanlage zugeführt wird, an der die passende, zweite Felge mittels eines verfahrbaren Schlittens eines Brückenrahmens zugeführt und automatisiert montiert wird. Hierbei kann der zuvor beschriebene Roboter eingespart werden. Die Gestaltung des Brückenrahmens mit einem bevorzugt vertikal verfahrbaren Schlitten ist einfach und damit auch kostengünstig.

Ein weiteres Merkmal, das für die optimale Verbindung des Fahrzeugreifens mit den Felgenteilen von Vorteil ist, besteht darin, dass der zu typisierende Fahrzeugreifen innerhalb der Fördereinrichtung der Fertigungsanlage und vor seiner Verbindung mit den Felgenteilen, in einer Justiereinrichtung ausgerichtet und in einer Beseifungsstation beseift wird. Die Beseifung findet nur in dem Bereich des Fahrzeugreifens statt, der nach der Montage auf der Felge mit dieser in Kontakt steht und dient einer besseren Verbindung zwischen Felge und Fahrzeugreifen.

Die erfindungsgemäße Fertigungsanlage zur Durchführung des Verfahrens ist dadurch gekennzeichnet, dass die Fertigungsanlage folgendes umfasst:
- eine Fördereinrichtung zum Transport des Fahrzeugreifens,
- eine Datenverarbeitungseinrichtung,
- eine Sensoreinrichtung zur Erfassung der an dem Fahrzeugreifen vorhandenen Markierung,
- mehrere Stationen mit darin fixierten, ersten Felgenteilen unterschiedlicher Größen,
- wenigstens einen Roboter der die benötigte, zweite Felge aus einem Magazin entnimmt oder wenigstens einen Brückenrahmen mit einem verfahrbaren Schlitten, jeweils zur Bereitstellung des zu dem zu typisierenden Fahrzeugreifen passenden, zweiten Felgenteils,
- mindestens einen Tintenstrahldrucker.

Die hier vorgestellte Fertigungsanlage weist einen einfachen Aufbau auf und schafft dennoch die Möglichkeit, die Markierung von Fahrzeugreifen in verkürzter Zeit und mit wesentlich verbesserter Qualität im Vergleich zu bekannten Lösungen auszuführen. Sie gestattet eine vollständige Entkopplung der Farbkodierung eines Fahrzeugreifens von dem Extrudierverfahren. Folglich können die bislang vorhandenen Nachteile, dass beispielsweise die Farbe durch den Vulkanisationsvorgang verändert wird, oder die Farbe Risse beziehungsweise Fehlstellen erzeugt, beseitigt werden. Zusammen mit der Datenverarbeitungseinrichtung wird zudem eine exakte Zuordnung der zu kodierenden Fahrzeugreifen zu einer der Stationen der Fertigungsanlage erreicht, wobei jede Station einer bestimmten Fahrzeugreifengröße beziehungsweise einem bestimmten Fahrzeugreifentyp entspricht. Die Montage der Felgenteile am Fahrzeugreifen ist ebenfalls in einer sehr kurzen Zeit realisierbar und somit gegenüber bekannten Ausführungen verbessert. Dies resultiert daraus, dass bei der erfindungsgemäßen Fertigungsanlage entweder ein Roboter zur Montage der zweiten, obere Felge zum Einsatz kommt oder in einer noch weiter vereinfachten Ausführung ein Brückenrahmen mit einem verfahrbaren Schlitten, an dem die zu montierende, zweite Felge fixiert ist.

Um den Druckkopf des Tintenstrahldruckers optimal an die Lauffläche des Fahrzeugreifens annähern zu können, geht ein weiterführender Vorschlag dahin, dass zumindest der Druckkopf des Tintenstrahldruckers beispielsweise mittels wenigstens einer mechanischen Verfahreinheit horizontal und vertikal bewegbar ausgeführt ist, was als bevorzugte Ausführungsform anzusehen ist, da der Aufbau hierbei sehr einfach und die Umsetzung problemlos möglich ist.

Selbstverständlich kann der Tintenstrahldrucker auch derart aufgebaut sein, das eine dreidimensionale Bewegung des Druckkopfes im Raum möglich ist. Die Annäherung an die Oberfläche des Fahrzeugreifens erfolgt hierbei ebenfalls computergesteuert.

Ein Ziel des Einsatzes der erfindungsgemäßen Fertigungsanlage besteht beispielsweise darin, einen kontinuierlichen Prozess umzusetzen, so dass keine Unterbrechungen in der Fertigung auftreten. Dies bedeutet, dass mit dieser Fertigungsanlage weniger oder gar keine Stillstandszeiten entstehen und somit mehr Fahrzeugreifen fertig gestellt werden können, als dies bislang möglich war. Ein wesentlicher Schritt in diese Richtung besteht darin, zum automatisierten Nachfüllen der für das computergesteuerte Tintenstrahldrucken erforderlichen Farben ein Farbmagazin mit Farbvorratsbehältern vorzusehen. Für jede Farbe ist dabei mindestens ein Farbvorratsbehälter vorhanden.

Als Fördereinrichtung wird bevorzugt ein Förderband verwendet, das an den Durchmesser des zu typisierenden Fahrzeugreifens anpassbar ausgeführt ist. Dabei wird für die Farbkodierung der Fahrzeugreifen ein Förderband eingesetzt, das aus zwei einzelnen und mit einem freien Abstand zueinander verlaufenden Teilförderbändern besteht. Dies bedeutet, dass beispielsweise für größere oder kleinere Fahrzeugreifen eine horizontale Bewegung der Teilförderbänder möglich ist, so dass die Anpassung an den geänderten Durchmesser des Fahrzeugreifens erreicht werden kann.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.
Es zeigt:
Figur 1: eine räumliche Darstellung einer Fertigungsanlage zur typisierenden Farbkodierung von Fahrzeugreifen in einer ersten Ausführungsvariante,
Figur 2: die Fertigungsanlage aus Figur 1 in einer Ansicht von oben,
Figur 3: den Blick auf die in den Figuren 1 und 2 gezeigte Fertigungsanlage mit Blickrichtung gemäß dem Pfeil III aus Figur 2
   und
Figur 4: eine räumliche Darstellung einer Fertigungsanlage zur typisierenden Farbkodierung von Fahrzeugreifen in einer weiteren Ausführungsvariante.

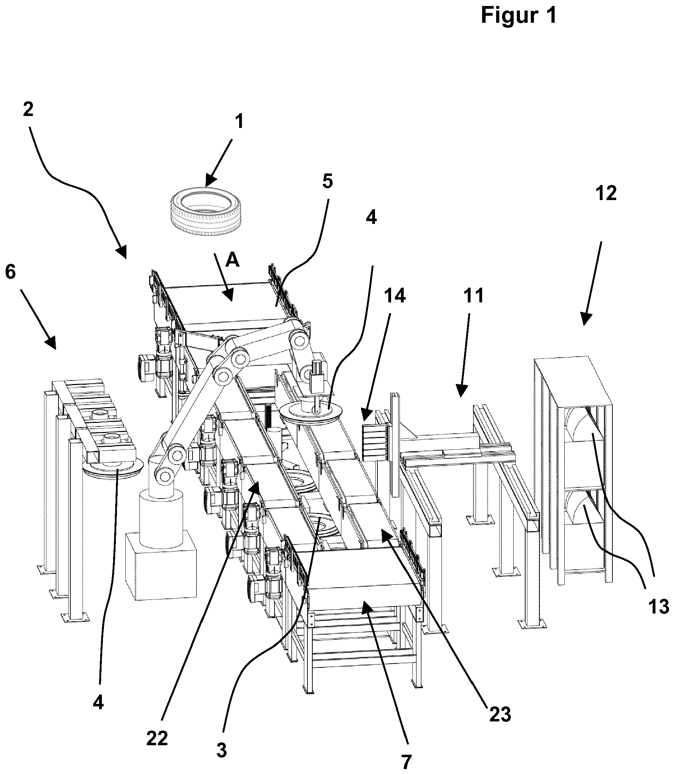

Aus der Figur 1 geht eine räumliche Darstellung einer Fertigungsanlage 2 zur typisierenden Farbkodierung von Fahrzeugreifen 1 in einer ersten Ausführungsvariante hervor. Die Bewegung des zuvor hergestellten und durch einen Vulkanisationsverfahren mit einem Profil auf der Lauffläche versehenen Fahrzeugreifens 1 erfolgt in Richtung des Pfeils A, die der Zuführrichtung der Fahrzeugreifen 1 entspricht. Zum Transport der Fahrzeugreifen 1 dient eine als Förderband ausgeführte Fördereinrichtung 7, deren Besonderheit darin besteht, dass das Förderband aus zwei mit einem Abstand zueinander verlaufenden Teilförderbändern 22 und 23 besteht. Die Laufrichtung entspricht dabei der Richtung des Pfeils A. Unterhalb der Fördereinrichtung 7 sind mehrere untere, erste Felgenteile 3 erkennbar, von denen jedes als Stufenfelge ausgeführt ist und damit mehreren Fahrzeugreifengrößen entspricht. In einem seitlich neben der Fördereinrichtung 7 angeordneten Magazin 6 sind verschiedene Größen der mit dem Fahrzeugreifen 1 zu verbindenden zweiten, oberen Felgenteile 4 eingeordnet. Ein programmgesteuerter Roboter 5 entnimmt mittels einer hier nicht näher bezeichneten Greifeinrichtung ein zweites Felgenteil 4 aus dem Magazin 6 und führt es an der erforderlichen Position mit dem Fahrzeugreifen 1 zusammen. Auf diese Weise wird der Fahrzeugreifen 1 mit einer oberen Felge 4 und einer untere Felge 3 luftdicht montiert, so dass der Fahrzeugreifen 1 im Anschluss daran mit Luft befüllt werden kann. Hierbei ist ein sehr geringer Luftdruck ausreichend, der beispielsweise zwischen 0,1-4 bar oder 0,5 bis 1 bar betragen kann. Der mit Luft befüllte Fahrzeugreifen 1 wird anschließend mit Hilfe des hauptsächlich aus dem Druckkopf 14 und dem Farbvorratsbehälter 13 bestehenden und mittels einer Verfahreinheit 11 bewegbaren Tintenstrahldruckers entlang seiner profilierten Lauffläche mit einer Farbkodierung versehen, die ihn individualisiert. Dabei ist es von Vorteil, wenn der Fahrzeugreifen 1 in eine Rotationsbewegung versetzt wird. Dies ermöglicht nämlich, den Tintenstrahldrucker sehr einfach auszuführen, so dass dieser lediglich horizontal und vertikal bewegt wird. In der Darstellung in Figur 1 wird dies durch die als Verfahreinheit 11 ausgeführten Führungen am Tintenstrahldrucker ersichtlich. Auf seiner dem Fahrzeugreifen 1 zugewandten Seite weist der Tintenstrahldrucker hier mehrere Druckköpfe 14 auf, mittels derer mehrere Farben in der erforderlichen Farbkodierung auf die profilierte Lauffläche des Fahrzeugreifens 1 aufgebracht werden können. Seitlich neben dem Tintenstrahldrucker ist in der Figur 1 ferner ein Farbmagazin 12 zu erkennen, in dem eine Vielzahl einzelner Farbvorratsbehälter 13 angeordnet sind, um den Tintenstrahldrucker permanent mit Farben zu versorgen. Dies ermöglicht eine kontinuierliche, also unterbrechungsfreie Fortsetzung der Farbkodierung, die damit sehr wirtschaftlich ist.

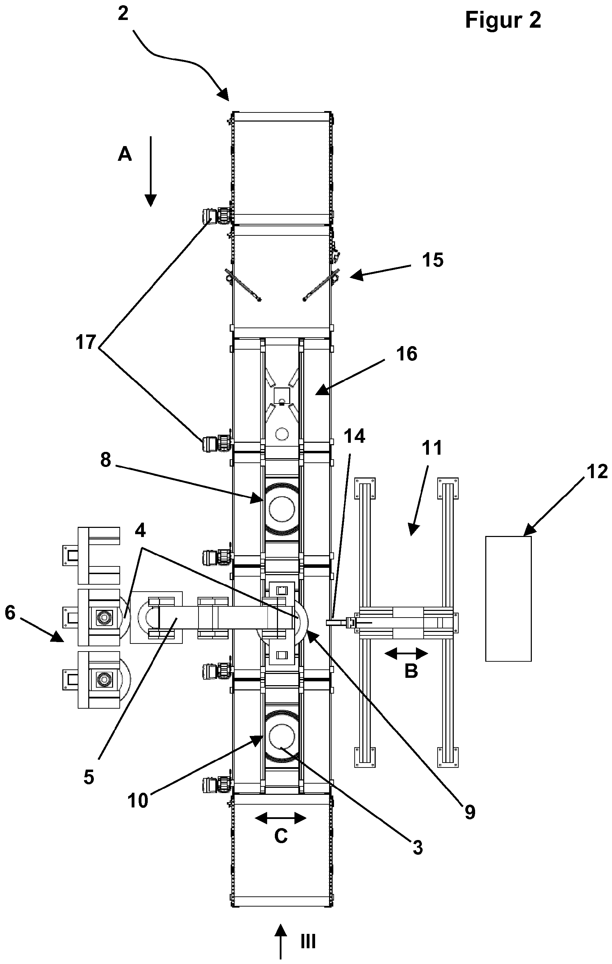

Die im Zusammenhang mit der Figur 1 beschriebene Fertigungsanlage 2 ist in einer Ansicht von oben in der Figur 2 gezeigt. Deutlicher, als dies im Zusammenhang mit der Beschreibung der Figur 1 möglich war, geht hieraus hervor, dass die Fertigungsanlage 2, in Richtung A des Transports der Fahrzeugreifen 1 betrachtet, zunächst eine Justiereinrichtung 15 und im Anschluss daran eine Beseifungsstation 16 aufweist. In der Justiereinrichtung 15 wird der mit einer Farbkodierung zu versehende Fahrzeugreifen 1 zunächst ausgerichtet und anschließend in der Beseifungsstation 16 im Bereich seiner mit der Felge in Kontakt kommenden Bereiche beseift. Zum Antrieb der Fördereinrichtung 7 dienen mehrere seitlich der Fördereinrichtung 7 erkennbare Antriebe 17, bei denen es sich vorliegend um Elektromotoren handelt. Unterhalb der als Förderband ausgeführten Fördereinrichtung 7 sind hier mehrere Stationen 8, 9, 10 erkennbar, wobei ein in der Figur nicht dargestellter Fahrzeugreifen 1 in der Station 8 mit einer ersten, unteren Felge 3 ausgestattet wird, während der Fahrzeugreifen 1 in der zweiten Station 9 vom Roboter 5 mit einer zweiten, oberen Felge 4 ausgestattet wird, um anschließend mittels des Tintenstrahldruckers eine Farbkodierung aufzubringen. Der Tintenstrahldrucker ist dabei in Richtung des Doppelpfeils B und quer hierzu, also von Station zu Station, bewegbar, wie dies zuvor bereits erläutert wurde.

Anzumerken ist hierbei noch, dass sich in jeder der genannten Stationen 8, 9, 10 jeweils unterschiedliche Größen oder Typen von Fahrzeugreifen 1 befinden können. Für die Auswahl und Montage des passenden, zweiten Felgenteils 4 ist der Roboter 5 vorhanden.

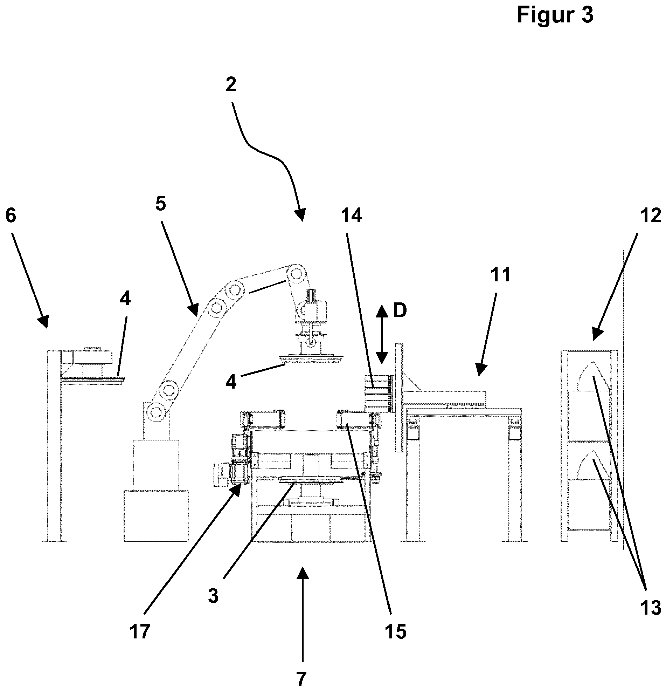

Die Sicht aus der Richtung des Pfeils III aus Figur 2 entspricht der Darstellung in Figur 3. Auch hier ist die zuvor bereits beschriebene Fertigungsanlage 2 dargestellt, wobei die vertikale Bewegungsrichtung des Druckkopfes 14 des Tintenstrahldruckers hierbei mit dem Doppelpfeil D verdeutlicht ist.

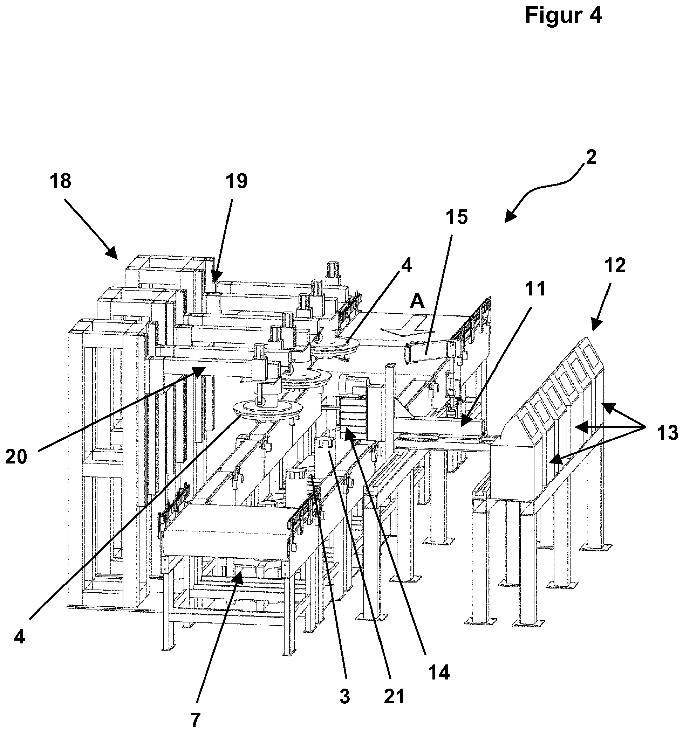

Aus der Figur 4 geht schließlich eine räumliche Darstellung einer Fertigungsanlage 2 zur Farbkodierung von Fahrzeugreifen 1 in einer anderen Ausführungsvariante hervor. Im Unterschied zu der zuvor beschriebenen Lösung wird hierbei kein Roboter eingesetzt, um die zweiten, oberen Felgenteile 4 mit dem Fahrzeugreifen 1 zu verbinden. Vielmehr kommen mehrere, nebeneinander angeordnete Brückenrahmen 18 zum Einsatz, die einem Maschinengestell entsprechen. Jeder der Brückenrahmen 18 verfügt auf seiner der Fördereinrichtung 7 zugewandten Seite über eine vertikale Führung 19, in der ein Schlitten 20 aufgenommen ist, der folglich auf- und ab bewegt werden kann. Der Schlitten 20 trägt endseitig, oberhalb der Fördereinrichtung 7 jeweils die zweite, obere Felge 4, die zur Verbindung mit je einem Fahrzeugreifen 1 passender Größe dient. Weist ausschließlich der Brückenrahmen 18 eine vertikale Führung 19 auf, so entspricht dies der einfachsten Lösung nach der Erfindung. Natürlich ist es auch möglich, innerhalb des Schlittens 20 eine horizontale Führung vorzusehen, so dass ein Ausgleich von sich gegebenenfalls einstellenden Ungenauigkeiten in der Positionierung des Fahrzeugreifens 1 ausgeglichen werden können und die zweite, obere Felge 4 optimal montiert wird. Die untere, erste Felge 3 befindet sich auf einem Stempel 21.

### Bezugszeichenliste

- 1: Fahrzeugreifen
- 2: Fertigungsanlage
- 3: erstes Felgenteil
- 4: zweites Felgenteil
- 5: Roboter
- 6: Magazin (für Felgenteile)
- 7: Fördereinrichtung (Förderband)
- 8: Station
- 9: Station
- 10: Station
- 11: Verfahreinheit
- 12: Farbmagazin
- 13: Farbvorratsbehälter (des Tintenstrahldruckers)
- 14: Druckköpfe (des Tintenstrahldruckers)
- 15: Justiereinrichtung
- 16: Beseifungsstation
- 17: Antrieb
- 18: Brückenrahmen
- 19: Führung
- 20: Schlitten
- 21: Stempel
- 22: Teilförderband
- 23: Teilförderband

## Patentansprüche

1. Verfahren zur Typisierung eines Fahrzeugreifens (1) mit mindestens einer Farbmarkierung, die mittels eines Farbdruckverfahrens auf den Fahrzeugreifen (1) aufgebracht wird, **dadurch gekennzeichnet, dass**:
- zunächst der Fahrzeugreifen (1) vulkanisiert wird,
- anschließend eine Sensoreinrichtung den Fahrzeugreifen (1) anhand einer an dem Fahrzeugreifen (1) vorhandenen Markierung identifiziert,
- der Fahrzeugreifen (1) dann in einer Fertigungsanlage (2) auf ein erstes Felgenteil (3) und anschließend auf ein zweites Felgenteil (4) aufgedrückt und mit Druckluft gefüllt wird
- die diesen Fahrzeugreifen (1) typisierende Farbcodierung mittels einer Tintenstrahltechnik auf die profilierte Lauffläche des Fahrzeugreifens (1) aufgebracht wird
und
- die Felgenteile (3, 4) nach der Farbaufbringung wieder vom Fahrzeugreifen (1) entfernt werden.

2. Verfahren nach Anspruch 1,
**dadurch gekennzeichnet, dass**
die Aufbringung der den Fahrzeugreifen (1) typisierenden Farbcodierung mittels einer kontinuierlichen Tintenstrahltechnik erfolgt.

3. Verfahren nach einem der vorstehend genannten Ansprüche,
**dadurch gekennzeichnet, dass**
zur Aufbringung der Farbmarkierung auf die profilierte Lauffläche des Fahrzeugreifens (1) ein Tintenstrahldrucker verwendet wird.

4. Verfahren nach einem der vorstehend genannten Ansprüche,
**dadurch gekennzeichnet, dass**
während der Aufbringung der Farbcodierung der Fahrzeugreifen (1) in eine Rotationsbewegung versetzt wird.

5. Verfahren nach einem der vorstehend genannten Ansprüche,
**dadurch gekennzeichnet, dass**
als Markierung zur Identifizierung des Fahrzeugreifens (1) ein Barcode oder ein QR-Code verwendet wird.

6. Verfahren nach einem der vorstehend genannten Ansprüche,
**dadurch gekennzeichnet, dass**
zur Einspannung des Fahrzeugreifens (1) jeweils eine Multi-Zoll-Felge (3, 4) verwendet wird.

7. Verfahren nach einem der Ansprüche 1 bis 6,
**dadurch gekennzeichnet, dass**
der Fahrzeugreifen (1) in der Fertigungsanlage (2) mit einem Druck zwischen 0,1 bis 4 bar aufgepumpt wird.

8. Verfahren nach einem der Ansprüche 1 bis 6,
**dadurch gekennzeichnet, dass**
der Fahrzeugreifen (1) in der Fertigungsanlage (2) mit einem Druck zwischen 0,5 bis 1 bar aufgepumpt wird.

9. Verfahren nach einem der vorstehend genannten Ansprüche,
**dadurch gekennzeichnet, dass**
der Farbauftrag auf dem Fahrzeugreifen (1) zur Kontrolle der Qualität mittels einer optischen Sensoreinheit oder eines Kameraprüfsystems geprüft wird, das Bestandteil der Fertigungsanlage (2) ist oder als separate Prüfeinheit vorgesehen wird.

10. Verfahren nach einem der Ansprüche 1 bis 9,
**dadurch gekennzeichnet, dass**
die erste, untere Felge (3) in der Fertigungsanlage (2) aufgenommen ist, der Fahrzeugreifen (1) zur Verbindung mit der ersten Felge (3) mittels einer Fördereinrichtung (7) zugeführt wird und die zweite, obere Felge (4) anschließend mittels eines Roboters (5) aus einem Magazin (6) ausgewählt, zugeführt und montiert wird.

11. Verfahren nach einem der Ansprüche 1 bis 9,
**dadurch gekennzeichnet, dass**
die erste, untere Felge (3) zur Verbindung mit dem Fahrzeugreifen (1) in der Fertigungsanlage (2) aufgenommen ist und der Fahrzeugreifen (1) mittels einer Fördereinrichtung (7) computergesteuert einer Station (8, 9, 10) der Fertigungsanlage (2) mit einer ersten Felge (3) zugeführt wird, an der die passende, zweite Felge (4) mittels eines verfahrbaren Schlittens (20) eines Brückenrahmens (18) zugeführt und automatisiert montiert wird.

12. Verfahren nach einem der vorstehend genannten Ansprüche,
**dadurch gekennzeichnet, dass**
der zu typisierende Fahrzeugreifen (1) innerhalb der Fördereinrichtung (7) der Fertigungsanlage (2), vor seiner Verbindung mit den Felgenteilen (3, 4), in einer Justiereinrichtung (15) ausgerichtet und in einer Beseifungsstation (16) beseift wird.

13. Fertigungsanlage zur Durchführung des Verfahrens nach einem der vorstehend genannten Ansprüche,
**dadurch gekennzeichnet, dass**
die Fertigungsanlage (2) umfasst:
- eine Fördereinrichtung (7) zum Transport des Fahrzeugreifens (1),
- eine Datenverarbeitungseinrichtung,
- eine Sensoreinrichtung zur Erfassung der an dem Fahrzeugreifen (1) vorhandenen Markierung,
- mehrere Stationen (8, 9, 10) mit darin fixierten, ersten Felgenteilen (3) unterschiedlicher Größen,
- wenigstens einen Roboter (6) der die benötigte, zweite Felge (4) aus einem Magazin (6) entnimmt oder wenigstens einen Brückenrahmen (18) mit einem verfahrbaren Schlitten (20), jeweils zur Bereitstellung des zu dem zu typisierenden Fahrzeugreifen (1) passenden, zweiten Felgenteils (4),
- mindestens einen Tintenstrahldrucker (11).

14. Fertigungsanlage nach Anspruch 13,
**dadurch gekennzeichnet, dass**
zumindest der Druckkopf (1) des Tintenstrahldruckers (11) mittels mindestens einer mechanischen Verfahreinheit horizontal und vertikal bewegbar ausgeführt ist.

15. Fertigungsanlage nach Anspruch 13 oder 14,
**dadurch gekennzeichnet, dass**
zum automatisierten Nachfüllen der für das computergesteuerte Tintenstrahldrucken erforderlichen Farben ein Farbmagazin (12) mit Farbvorratsbehältern (13) vorhanden ist.

16. Fertigungsanlage nach einem der Ansprüche 13 bis 15,
**dadurch gekennzeichnet, dass**
die Fördereinrichtung (7) ein Förderband ist, das an den Durchmesser des zu typisierenden Fahrzeugreifens (1) anpassbar ausgeführt ist.
